# EUROPÄISCHE PATENTSCHRIFT

(11) **EP 1 641 651 B1**
(45) Veröffentlichungstag und Bekanntmachung des Hinweises auf die Patenterteilung: **29.11.2006**
(21) Anmeldenummer: 04738813.7
(22) Anmeldetag: 30.06.2004
(51) Int. Cl.: B60N 2/28, B60N 2/26

(54) **KINDERSITZ**
CHILD SEAT
SIEGE D'ENFANT

(30) Priorität: 02.07.2003 DE 10329921
(43) Veröffentlichungstag der Anmeldung: 05.04.2006
(73) Patentinhaber: Concord GmbH, 95346 Stadtsteinach (DE)
(72) Erfinder: KÖNIG, Walter, 72525 Münsingen (DE); SCHOBERT, Uwe, 95158 Kirchenlamitz (DE); HÄHNEL, Bernhard, 14129 Berlin (DE)
(74) Vertreter: Zinsinger, Norbert
(86) Internationale Anmeldenummer: PCT/DE2004/001367
(87) Internationale Veröffentlichungsnummer: WO 2005/002907

(56) Entgegenhaltungen:
- EP-A- 0 325 352
- EP-A- 0 640 508
- WO-A-96/01748
- DE-A- 4 204 228
- DE-U- 9 421 432
- DE-U- 20 017 448
- US-A- 5 609 393
- US-B1- 6 428 099

## Beschreibung

Die Erfindung betrifft einen Kindersitz mit einer Sitzschale, die an einem Basisteil zwischen unterschiedlichen Positionen, zum Beispiel Sitzposition, Liegeposition, Zwischenposition (en), hin und her verstellbar ist, wobei am Vorderrand der Sitzschale ein Betätigungsgriff vorgesehen ist, der mit einer Verriegelungseinrichtung verbunden ist, mittels der die Sitzschale in bezug auf das Basisteil im normalen Ruhezustand des Betätigungsgriffes in einer der unterschiedlichen Positionen festgehalten wird und durch Betätigung des Betätigungsgriffes verstellbar ist.

Bei einem solchen bekannten Kindersitz ist die Entriegelungseinrichtung derartig ausgebildet, dass die Verstellung der Sitzschale in bezug auf das Basisteil mit einer Hand allein kaum bzw. nur mit einem großen Kraftaufwand möglich ist. Der Handhabungskomfort dieses bekannten Kindersitzes lässt also noch Wünsche offen.

Aus der WO 96/01748 A1 ist ein Kindersitz mit einer Sitzschale bekannt, die an einem Basisteil zwischen unterschiedlichen Positionen (Sitzposition, Liegeposition, Zwischenposition(en)) hin und her verstellbar ist, wobei am Vorderrand des Kindersitzes ein Betätigungsgriff vorgesehen ist, der mit einer Verriegelungseinrichtung verbunden ist, mittels der die Sitzschale in Bezug auf das Basisteil im normalen Ruhezustand des Betätigungsgriffes in einer der unterschiedlichen Positionen festgehalten wird und durch Betätigung des Betätigungsgriffes verstellbar ist. Der Betätigungsgriff ist dort als Schwenkgriff ausgebildet, zum Vorderrand der Sitzschale parallel orientiert, und von der normalen Verriegelungsstellung in eine Entriegelungsstellung und von dort mittels einer Rückstell-Federeinrichtung in die Verriegelungsstellung zurückverstellbar.

Aus der DE 94 21 432 U1 ist ein Kindersitz mit einem Sockel und einer Sitzschale bekannt, die relativ zum Sockel verschiebbar und festlegbar ist. Die Sitzschale oder der Sockel weist mindestens einen angeformten Führungsvorsprung zum Führen der Sitzschale an dem Sockel auf. Mindestens eine direkt am Sockel oder an der Sitzschale ausgebildete Führungsnut ist zur Aufnahme des Führungsvorsprungs vorgesehen, der beim Verschieben der Sitzschale relativ zum Sockel in der Führungsnut geführt wird. Die Sitzschale ist unmittelbar am Sockel gehalten.

Die DE 200 17 448 U1 offenbart einen Kindersitz, der ein Gestell, einen Sitz und eine Sperrvorrichtung aufweist. Das Gestell weist auf dem Boden einen Vorsprung und an den beiden Seiten jeweils eine runde Vertiefung für die Sperrvorrichtung auf, neben der eine Rastnut vorgesehen ist und deren Boden mit einem ersten und einem zweiten bogenförmigen Schlitz versehen ist. Der erste bogenförmige Schlitz ist im oberen und unteren Todpunkt jeweils an eine obere und untere Positioniernut angeschlossen. Der Sitz weist auf der Unterseite einen vorderen Schwenkhebel und einen hinteren Schwenkhebel auf, wobei das Ende des vorderen Schwenkhebels durch den zweiten bogenförmigen Schlitz hindurchgeht und an der Sperrvorrichtung angelenkt ist. Das Ende des hinteren Schwenkhebels ist am Gestell angelenkt. Die Sperrvorrichtung weist eine Drehscheibe auf, die in der runden Vertiefung aufgenommen ist.

Der Erfindung liegt die Aufgabe zugrunde, einen Kindersitz der eingangs genannten Art zu schaffen, der einfach ausgebildet ist, und bei dem die Sitzschale einfach und kraftsparend zwischen den unterschiedlichen Positionen hin und her verstellbar ist.

Diese Aufgabe wird bei einem Kindersitz der eingangs genannten Art erfindungsgemäß dadurch gelöst, dass der Betätigungsgriff als Drehgriff ausgebildet ist, der um eine zum Vorderrand der Sitzschale mindestens annähernd parallele Drehachse von der normalen Verriegelungsstellung in eine Entriegelungsstellung und von dort mittels einer Rückstellfedereinrichtung in die Verriegelungsstellung zurück drehbar ist, und der gleichzeitig in der Entriegelungsstellung zum Verstellen der Sitzschale in bezug auf das Basisteil einen Handhabe- und Verstellgriff bildet, wobei am Basisteil eine Kulisseneinrichtung vorgesehen ist, die mindestens eine Kulissenbahn aufweist, die mit Rastausnehmungen für die unterschiedlichen Positionen der Sitzschale in bezug auf das Basisteil ausgebildet ist, und dass die Verriegelungseinrichtung eine an den Drehgriff angeschlossene Verbindungseinrichtung mit mindestens einem entlang der mindestens einen Kulissenbahn geführten Führungselement und mit mindestens einem an die Rastausnehmungen angepassten Rastelement aufweist.

Durch die Ausbildung des Betätigungsgriffes als Drehgriff, mit dem durch Drehen eine Entriegelung der Sitzschale in bezug auf das Basisteil erfolgt, wobei der Drehgriff in der Entriegelungsstellung gleichzeitig einen Handhabegriff zum Verstellen der Sitzschale in bezug auf das Basisteil bildet, ergibt sich eine einfache Handhabbarkeit des erfindungsgemäßen Kindersitzes.

Als vorteilhaft hat es sich bei dem erfindungsgemäßen Kindersitz erwiesen, wenn der Drehgriff in einer am Vorderrand der Sitzschale ausgebildeten Aussparung vorgesehen ist. Diese Aussparung kann von einem Bezug des Kindersitzes mindestens teilweise überdeckt sein.

Erfindungsgemäß ist am Basisteil eine Kulisseneinrichtung vorgesehen, die mindestens eine Kulissenbahn aufweist, die mit Rastausnehmungen für die unterschiedlichen Positionen der Sitzschale in bezug auf das Basisteil ausgebildet ist, und die Verriegelungseinrichtung weist eine an den Drehgriff angeschlossene Verbindungseinrichtung auf, die mindestens ein entlang der mindestens einen Kulissenbahn geführtes Führungselement und mindestens ein an die Rastausnehmungen angepasstes Rastelement besitzt.

Dabei kann die Verbindungseinrichtung ein das mindestens eine Führungselement und das mindestens eine Rastelement aufweisendes erstes Verbindungsteil und ein vom Drehgriff starr wegstehendes zweites Verbindungsteil aufweisen, die miteinander verschwenkbar verbunden sind. Zur schwenkbaren Verbindung kann das erste Verbindungsteil an seinem von der Kulisseneinrichtung entfernten Endabschnitt mit einem Langloch ausgebildet sein, durch das sich eine Achse erstreckt, die vom zweiten Verbindungsteil wegsteht.

Zweckmäßig ist es, wenn das erste Verbindungsteil als Plattenelement ausgebildet ist, und wenn das zweite Verbindungsteil von zwei Seitenlaschen gebildet ist, die von den voneinander entfernten Enden des Drehgriffs starr wegstehen. Durch eine derartige Ausbildung ergibt sich der Vorteil einer gewünschten mechanischen Stabilität und Betriebszuverlässigkeit.

Bei dem erfindungsgemäßen Kindersitz kann die Rückstellfedereinrichtung mindestens ein der Verbindungseinrichtung zugeordnetes Federelement aufweisen. Desgleichen ist es möglich, dass die Rückstellfedereinrichtung mindestens ein dem Drehgriff zugeordnetes Federelement aufweist.

Als vorteilhaft hat es sich erwiesen, wenn das Basisteil zwei rückwärts nach oben stehende Rahmenseitenteile aufweist, an deren oberseitigen Enden eine Schwenkachse für die Sitzschale vorgesehen ist, um die die Sitzschale zwischen den unterschiedlichen Positionen verschwenkbar ist. Durch eine solche Ausbildung der zuletzt genannten Art ergibt sich der erhebliche Vorteil, dass die Schwenkachse, um die die Sitzschale verschwenkbar ist, vom Drehgriff zum Entriegeln und zur Verstellung der Sitzschale einen großen Abstand besitzt, so dass bei einem vorgegebenen Drehmoment für die Sitzschale die Verstellkraft entsprechend klein ist. Das bedeutet, dass der Kraftaufwand zum Verstellen der Sitzschale bei dem erfindungsgemäßen Kindersitz vergleichsweise klein ist. Der Handhabungskomfort ist folglich in vorteilhafter Weise groß.

Weitere Einzelheiten, Merkmale und Vorteile ergeben sich aus der nachfolgenden Beschreibung wesentlicher Einzelheiten des erfindungsgemäßen Kindersitzes.

Es zeigen:
- Figur 1: schematisch in einer Seitenansicht eine Ausbildung des Kindersitzes bzw. wesentlicher Einzelheiten desselben,
- Figur 2: eine Ausbildung der Verbindungseinrichtung zwischen dem an der Sitzschale vorgesehenen Drehgriff und der am Basisteil befestigten Kulisseneinrichtung in einer Seitenansicht - in der Sitzstellung-Einrastposition,
- Figur 3: eine der Figur 2 ähnliche Darstellung der Verbindungseinrichtung in der Sitzstellung-Ausrastposition,
- Figur 4: eine den Figuren 2 und 3 ähnliche Darstellung der Verbindungseinrichtung in der Liegestellung-Einrastposition, und
- Figur 5: eine den Figuren 2 bis 4 ähnliche Seitenansicht der Verbindungseinrichtung in der Liegestellung-Ausrastposition.

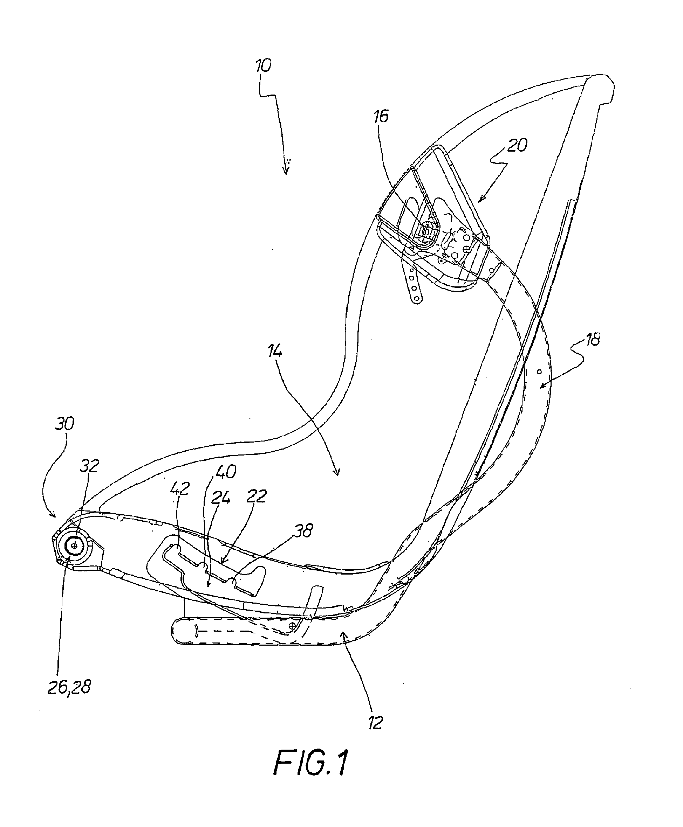

Figur 1 zeigt schematisch in einer Seitenansicht eine Ausbildung des Kindersitzes 10 bzw. wesentlicher Teile desselben. Der Kindersitz 10 weist ein Basisteil 12 auf, an dem eine Sitzschale 14 zwischen unterschiedlichen Positionen wie einer Sitzposition, einer Liegeposition und wenigstens einer Zwischenposition hin und her verstellbar ist. Die Sitzschale 14 ist um eine Schwenkachse 16 in bezug auf das Basisteil 12 zwischen den besagten Positionen verstellbar. Das Basisteil 12 weist zwei rückwärts nach oben stehende Rahmenseitenteile 18 auf. Die Schwenkachse 16 ist an den oberseitigen Enden 20 der Rahmenseitenteile 18 vorgesehen.

Vom Basisteil 12 steht eine Kulisseneinrichtung 22 weg, durch die die unterschiedlichen Positionen der Sitzschale 14 in bezug auf das Basisteil 12 bestimmt sind. Die Kulisseneinrichtung 22 weist zwei seitlich voneinander beabstandete deckungsgleiche Kulissenbahnen 24 auf. Die Kulissenbahnen 24 sind kreisbogenförmig gestaltet. Der Krümmungsmittelpunkt der Kulissenbahnen 24 befindet sich in der Schwenkachse 16.

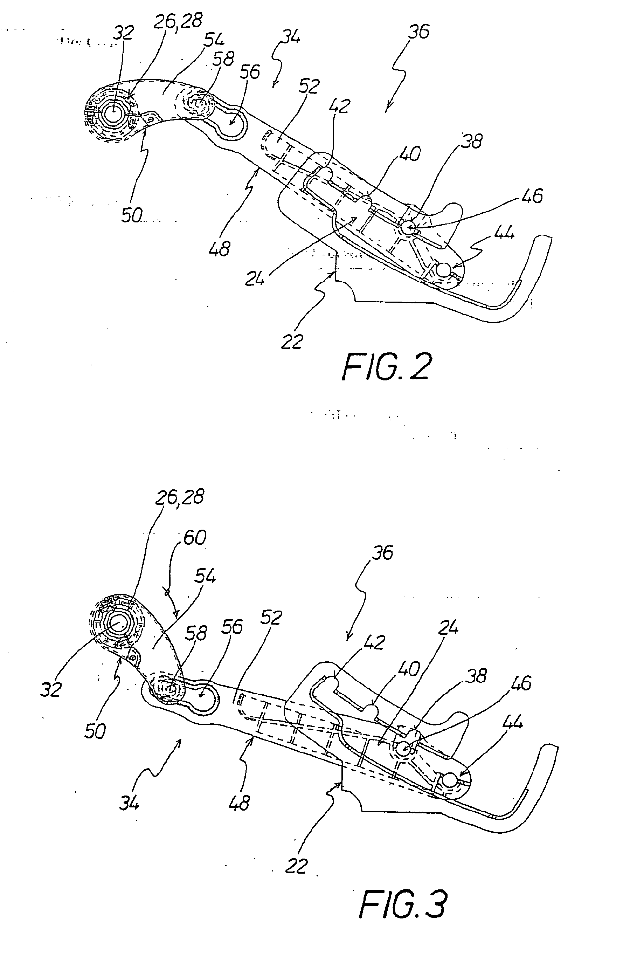

Die Kulisseneinrichtung 22 wird weiter unten in Verbindung mit den Figuren 2 bis 5 detailliert beschrieben.

Zur Verstellung der Sitzschale 14 in bezug auf das Basisteil 12 weist der Kindersitz 10 ein Betätigungsgriff 26 auf, der als Drehgriff 28 ausgebildet ist. Der Drehgriff 28 ist um eine zum Vorderrand 30 der Sitzschale 14 parallele Drehachse 32 drehbar. Der Drehgriff 28 ist mittels einer Verbindungseinrichtung 34, wie sie in den Figuren 2 bis 5 dargestellt ist, mit der Kulisseneinrichtung 22 verbunden. Der Drehgriff 28, die Verbindungseinrichtung 34 und die Kulisseneinrichtung 22 bilden eine Verriegelungseinrichtung 36 des Kindersitzes 10. In Figur 1 ist auf die Darstellung der Verbindungseinrichtung 34 verzichtet worden.

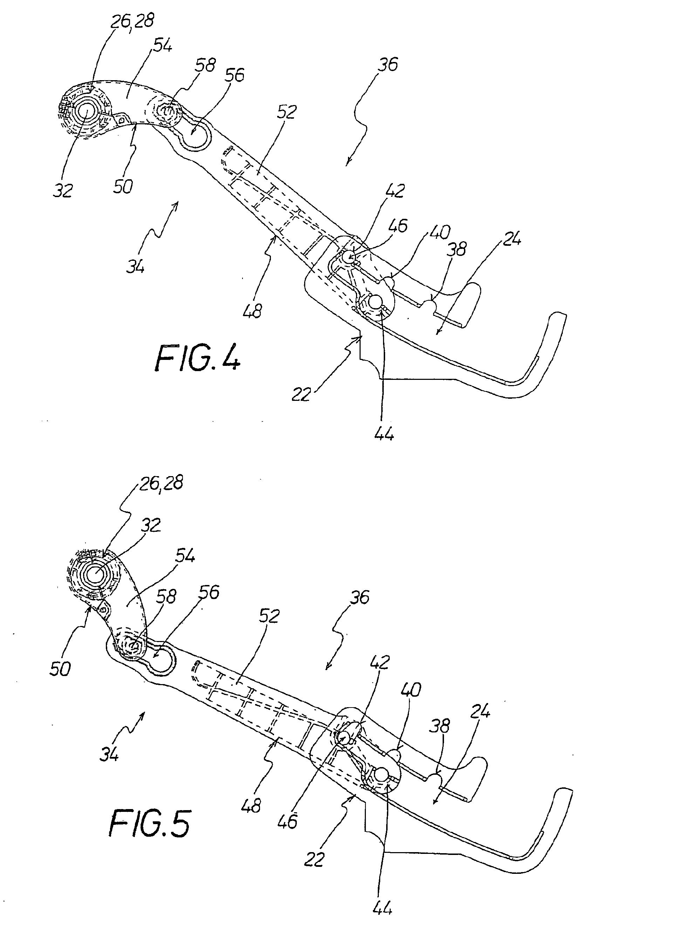

Figur 2 verdeutlicht in einer Seitenansicht die Verriegelungseinrichtung 36 mit der Verbindungseinrichtung 34 zwischen dem Drehgriff 28 und der Kulisseneinrichtung 22. Die Kulissenbahn 24 der Kulisseneinrichtung 22 ist mit Rastausnehmungen 38, 40 und 42 ausgebildet. Durch die beiden seitlichen, deckungsgleichen Rastausnehmungen 38 wird eine Sitzposition des Kindersitzes 10 (siehe Figur 1) bestimmt. Durch die Rastausnehmungen 42 wird eine Liegeposition der Sitzschale 14 in bezug auf das Basisteil 12 bestimmt. Durch die Rastausnehmungen 40 wird eine Zwischenposition zwischen der Sitz- und Liegeposition der Sitzschale 14 bestimmt. Die Verbindungseinrichtung 34 weist zwei seitliche, entlang den beiden seitlichen Kulissenbahnen 24 geführte Führungselemente 44 und an die beiden sich seitlich gegenüberliegenden Rastausnehmungen 38, 40, 42 angepasste, von den Führungselementen definiert beabstandete Rastelemente 46 auf. In Figur 4 sind die beiden seitlich voneinander abgewandten Rastelemente 46 in die Rastausnehmungen 38 eingerastet. Auf diese Weise ist die Sitzschale 14 in bezug auf das Basiselement 12 des Kindersitzes 10 in der Sitzposition festgelegt.

Die Verbindungseinrichtung 34 weist ein erstes Verbindungsteil 48 und ein zweites Verbindungsteil 50 auf. Am ersten Verbindungsteil 48, das als Plattenelement 52 ausgebildet ist, sind die Führungselemente 44 und die Rastelemente 46 vorgesehen. Das zweite Verbindungsteil 50 ist von zwei Seitenlaschen 54 gebildet, die von den voneinander entfernten Enden des Drehgriffes 28 starr wegstehen.

Das Plattenelement 52 des ersten Verbindungsteiles 48 ist mit einem Langloch 56 ausgebildet, in das eine Achse 58 hineinsteht, die die Seitenlaschen 54 miteinander verbindet. Auf diese Weise ergibt sich eine gelenkige Verbindung des Drehgriffes 28 mit der Kulisseneinrichtung 22.

Figur 2 zeigt die Verriegelungseinrichtung 36 in der Sitzstellung-Arretierposition. Demgegenüber verdeutlicht die Figur 3 die Verriegelungseinrichtung 36 in der Sitzstellung-Entrastposition. Diese Position ergibt sich, wenn der Drehgriff um die Drehachse 32 im Uhrzeigersinn verschwenkt wird, was in Figur 3 durch den zur Drehachse 32 konzentrischen bogenförmigen Pfeil 60 angedeutet ist. In dieser Ausrastposition kann die Sitzschale 14 dann wunschgemäß verstellt werden. Zu diesem Zwecke wird der Drehgriff 28 kraftsparend gehandhabt, d.h. es wird am Drehgriff 28 gezogen bzw. gedrückt, um die Sitzschale 14 von der Sitzposition in die durch die Rastausnehmungen 40 definierte Zwischenposition oder in die durch die Rastausnehmungen 42 bestimmte Liegeposition bzw. Sitzposition zu verstellen. Wird nach einer solchen Verstellung der Drehgriff 28 wieder losgelassen, so wird die Verriegelungseinrichtung 36 mit Hilfe einer (nicht dargestellten) Rückstell-Federeinrichtung wieder in die normale Verriegelungsstellung zurückgestellt.

Figur 4 verdeutlicht die Verriegelungseinrichtung 36 in der verriegelten Liegeposition. Demgegenüber verdeutlicht die Figur 5 die Verriegelungseinrichtung 36 in der Entriegelungsstellung der Liegeposition. Gleiche Einzelheiten sind in den Figuren 1 bis 5 jeweils mit denselben Bezugsziffern bezeichnet, so dass es sich erübrigt, in Verbindung mit allen Figuren alle Einzelheiten jeweils detailliert zu beschreiben.

## Patentansprüche

1. Kindersitz mit einer Sitzschale (14), die an einem Basisteil (12) zwischen unterschiedlichen Positionen, zum Beispiel Sitzposition, Liegeposition, Zwischenposition (en), hin und her verstellbar ist, wobei am Vorderrand (30) der Stizschale (14) ein Betätigungsgriff (26) vorgesehen ist, der mit einer Verriegelungseinrichtung (36) verbunden ist, mittels der die Sitzschale (14) in bezug auf das Basisteil (12) im normalen Ruhezustand des Betätigungsgriffes (26) in einer der unterschiedlichen Positionen festgehalten wird und durch Betätigung des Betätigungsgriffes (26) verstellbar ist, wobei der Betätigungsgriff (26) um eine Drehachse (32) von der normalen Verriegelungsstellung in eine Entriegelungsstellung und von dort mittels einer Rückstell-Federeinrichtung in die Verriegelungsstellung zurück drehbar ist und der gleichzeitig in der Entriegelungsstellung zum Verstellen der Sitzschale (14) in bezug auf das Basisteil (12) einen Verstellgriff bildet,
**dadurch gekennzeichnet,**
**dass** der Betätigungsgriff (26) als Drehgriff (28) ausgebildet ist, der um eine zum Vorderrand (30) der Sitzschale (14) mindestens annähernd parallele Drehachse (32) von der normalen Verriegelungsstellung in eine Entriegelungsstellung drehbar ist, und dass am Basisteil (12) eine Kulisseneinrichtung (22) vorgesehen ist, die mindestens eine Kulissenbahn (24) aufweist, die mit Rastausnehmungen (38, 40, 42) für die unterschiedlichen Positionen der Sitzschale (14) in bezug auf das Basisteil (12) ausgebildet ist, und die Verriegelungseinrichtung (36) eine an den Drehgriff (28) angeschlossene Verbindungseinrichtung (34) mit mindestens einem entlang der mindestens einen Kulissenbahn (24) geführten Führungselement (44) und mit mindestens einem an die Rastausnehmungen (38, 40, 42) angepassten Rastelement (46) aufweist.

2. Kindersitz nach Anspruch 1,
**dadurch gekennzeichnet,**
**dass** der Drehgriff (28) in einer am Vorderrand (30) der Sitzschale (14) ausgebildeten Aussparung vorgesehen ist.

3. Kindersitz nach Anspruch 1,
**dadurch gekennzeichnet,**
**dass** die Verbindungseinrichtung (34) ein das mindestens eine Führungselement (44) und das mindestens eine Rastelement (46) aufweisendes erstes Verbindungsteil (48) und ein vom Drehgriff (28) starr wegstehendes zweites Verbindungsteil (50) aufweist, die miteinander verschwenkbar verbunden sind.

4. Kindersitz nach Anspruch 3,
**dadurch gekennzeichnet,**
**dass** das erste Verbindungsteil (48) als Plattenelement (52) ausgebildet ist, und dass das zweite Verbindungsteil (50) von zwei Seitenlaschen (54) gebildet ist, die von den voneinander entfernten Enden des Drehgriffes (28) starr wegstehen.

5. Kindersitz nach Anspruch 1,
**dadurch gekennzeichnet,**
**dass** die Rückstellfiedereinrichtung mindestens ein der Verbindungseinrichtung (34) zugeordnetes Federelement aufweist.

6. Kindersitz nach Anspruch 1,
**dadurch gekennzeichnet,**
**dass** die Rückstellfedereinrichtung mindestens ein dem Drehgriff (28) zugeordnetes Federelement aufweist.

7. Kindersitz nach einem der Ansprüche 1 bis 6,
**dadurch gekennzeichnet,**
**dass** das Basisteil (12) zwei rückwärts nach oben stehende Rahmenseitenteile (18) aufweist, an deren oberseitigen Enden eine Schwenkachse (16) für die Sitzschale (14) bestimmt ist, um die die Sitzschale (14) zwischen den unterschiedlichen Positionen verschwenkbar ist.

## Claims

1. Child seat with a seat shell (14) which can be displaced to and fro between different positions, for example sitting position, reclining position, intermediate position(s), on a base part (12), an actuating handle (26) being provided on the front edge (30) of the seat shell (14) and being connected to a locking device (36) by means of which the seat shell (14) is secured in one of the different positions with respect to the base part (12) in the normal inoperative state of the actuating handle (26) and can be displaced by actuation of the actuating handle (26), the actuating handle (26) being rotatable about an axis of rotation (32) from the normal locking position into an unlocking position and being rotatable back from there into the locking position by means of a restoring spring device, and at the same time forming a displacing handle in the unlocking position to displace the seat shell (14) with respect to the base part (12), **characterized in that** the actuating handle (26) is designed as a rotary handle (28) which can be rotated about an axis of rotation (32), which is at least approximately parallel to the front edge (30) of the seat shell (14), from the normal locking position into an unlocking position and **in that** a slotted-guide device (22) is provided on the base part (12) and has at least one slotted-guide path (24) which is designed with latching recesses (38, 40, 42) for the different positions of the seat shell (14) with respect to the base part (12), and the locking device (36) has a connecting device (34), which is connected to the rotary handle (28), with at least one guide element (44) guided along the at least one slotted-guide path (24) and with at least one latching element (46) matched to the latching recesses (38, 40, 42).

2. Child seat according to Claim 1, **characterized in that** the rotary handle (28) is provided in a cutout formed on the front edge (30) of the seat shell (14).

3. Child seat according to Claim 1, **characterized in that** the connecting device (34) has a first connecting part (48) having the at least one guide element (44) and the at least one latching element (46) and a second connecting part (50) protruding away rigidly from the rotary handle (28), the connecting parts being connected pivotably to each other.

4. Child seat according to Claim 3, **characterized in that** the first connecting part (48) is designed as a plate element (52) and the second connecting part (50) is formed by two side tabs (54) which protrude away rigidly from the mutually remote ends of the rotary handle (28).

5. Child seat according to Claim 1, **characterized in that** the restoring spring device has at least one spring element assigned to the connecting device (34).

6. Child seat according to Claim 1, **characterized in that** the restoring spring device has at least one spring element assigned to the rotary handle (28).

7. Child seat according to one of Claims 1 to 6, **characterized in that** the base part (12) has two frame side parts (18) which protrude upward at the rear and on the upper ends of which a pivot axis (16) for the seat shell (14) is defined, about which the seat shell (14) can be pivoted between the different positions.

## Revendications

1. Siège pour enfant comportant une coque formant siège (14), qui peut être réglée en va-et-vient sur une partie de base (12) entre différentes positions, telles que position assise, position couchée, position(s) intermédiaire(s), sachant que sur le bord avant (30) de la coque formant siège (14) est prévue une poignée de manoeuvre (26) qui est reliée à un dispositif de verrouillage (36), au moyen duquel la coque formant siège (14), dans la position de repos normale de la poignée de manoeuvre (26), peut être maintenue par rapport à la partie de base (12) dans l'une des différentes positions et peut être réglée par l'actionnement de la poignée de manoeuvre (26), ladite poignée de manoeuvre (26) pouvant tourner autour d'un axe de rotation (32) depuis la position de verrouillage normale dans une position de déverrouillage et à partir de celle-ci à nouveau dans la position de verrouillage au moyen d'un dispositif à ressort de rappel, et formant en même temps dans la position de déverrouillage une poignée de réglage pour régler la coque formant siège (14) par rapport à la partie de base (12), **caractérisé en ce que** la poignée de manoeuvre (26) est réalisée sous forme de poignée rotative (28), qui est apte à tourner autour d'un axe de rotation (32) au moins à peu près parallèle au bord avant (30) de la coque formant siège (14), à partir de la position de verrouillage normale dans une position de déverrouillage, et **en ce qu'**il est prévu sur la partie de base (12) un système à coulisse (22), qui comporte au moins une voie de coulisse (24), qui est réalisée avec des évidements de blocage (38, 40, 42) pour les différentes positions de la coque formant siège (14) par rapport à la partie de base (12), et le dispositif de verrouillage (36) comporte un dispositif de liaison (34), assemblé à la poignée rotative (28) et comportant au moins un élément de guidage (44), guidé le long de ladite au moins une voie de coulisse (24), et comportant au moins un élément de blocage (46) adapté aux évidements de blocage (38, 40, 42).

2. Siège pour enfant selon la revendication 1, **caractérisé en ce que** la poignée rotative (28) est prévue dans un évidement réalisé sur le bord avant (30) de la coque formant siège (14).

3. Siège pour enfant selon la revendication 1, **caractérisé en ce que** le dispositif de liaison (34) comporte un premier élément de liaison (48), comportant ledit au moins un élément de guidage (44) et ledit au moins un élément de blocage (46), et un deuxième élément de liaison (50), en saillie rigide sur la poignée rotative (28), lesquels éléments de liaison peuvent être reliés l'un à l'autre de manière pivotante.

4. Siège pour enfant selon la revendication 3, **caractérisé en ce que** le premier élément de liaison (48) est réalisé sous forme de plaque (52) et **en ce que** le deuxième élément de liaison (50) est formé par deux pattes latérales (54), qui sont en saillie rigide sur les extrémités, éloignées l'une de l'autre, de la poignée rotative (28).

5. Siège pour enfant selon la revendication 1, **caractérisé en ce que** le dispositif à ressort de rappel comporte au moins un ressort associé au dispositif de liaison (34).

6. Siège pour enfant selon la revendication 1, **caractérisé en ce que** le dispositif à ressort de rappel comporte au moins un ressort associé à la poignée rotative (28).

7. Siège pour enfant selon l'une quelconque des revendications 1 à 6, **caractérisé en ce que** la partie de base (12) comporte deux parties latérales de châssis (18) orientées vers le haut vers l'arrière, sur les extrémités supérieures desquelles est défini un axe de pivotement (16) pour la coque formant siège (14), afin que la coque formant siège (14) puisse pivoter entre les différentes positions.
